# EUROPEAN PATENT APPLICATION

(11) **EP 4 657 725 A1**
(43) Date of publication of application: **03.12.2025**
(21) Application number: 25731412.0
(22) Date of filing: 10.04.2025
(51) Int. Cl.: H02K 55/00, F04D 17/12

(54) **COOLING MACHINE FOR SUPERCONDUCTING MOTOR, AND SUPERCONDUCTING MOTOR**

(30) Priority: 12.04.2024 CN 202410444397
(71) Applicant: Lihan Cryogenics Co., Ltd., Shenzhen (CN), Shenzhen, Guangdong 518110 (CN)
(72) Inventor: LI, Haibing, Shenzhen, Guangdong 518110 (CN); ZHANG, Yibing, Shenzhen, Guangdong 518110 (CN); YANG, Zhaohui, Shenzhen, Guangdong 518110 (CN); HUANG, Shengli, Shenzhen, Guangdong 518110 (CN)
(74) Representative: Bandpay & Greuter
(86) International application number: PCT/CN2025/088181
(87) International publication number: WO 2025/214428

(57) **Abstract**

The present application provides a refrigerator for a superconducting motor and a superconducting motor, relating to the technical field of refrigeration. The refrigerator for a superconducting motor includes a refrigeration assembly, a compressor inner stator, a compressor rotor and a compressor outer stator, and by connecting an end of the refrigeration assembly to a superconducting rotor of the superconducting motor, the cooling effect of the refrigerator for a superconducting motor is improved; the compressor inner stator is sleeved on an outer periphery of the cylinder, and the compressor outer stator is sleeved on an outer periphery of the compressor inner stator, and by providing a gap between the compressor rotor and an inner periphery of the compressor outer stator, the compressor outer stator is separated from the compressor inner stator and the compressor rotor, and the separated compressor outer stator is fixedly connected to a superconducting stator of the superconducting motor, and thus a power supply line connected to the compressor outer stator will not rotate, realizing a split design, and meanwhile simplifying the structure of the refrigerator for a superconducting motor, and improving the use performance of the superconducting motor.

## Description

The present application claims priority to Chinese Patent Application No. 202410444397.7, filed with China National Intellectual Property Administration on April 12, 2024, and entitled "Refrigerator for superconducting motor and superconducting motor", the content of which is hereby incorporated by reference in its entirety.

### TECHNICAL FIELD

The present application relates to the technical field of refrigeration, and in particular, to a refrigerator for a superconducting motor and a superconducting motor.

### BACKGROUND

In the development of electric aircraft propulsion systems, obtaining an efficient and lightweight power system is a challenging task. Superconducting motor is a viable efficient and lightweight component of power systems. The superconducting motor is a motor whose excitation winding is made of a superconducting material and which is wound with a wire that can carry high-density current under a strong magnetic field.

In the prior art, a superconducting motor usually needs to operate in a low-temperature environment to ensure that the superconducting material can maintain a superconducting state. Therefore, the superconducting motor usually requires an effective cooling method to maintain a low-temperature state. Low-temperature cooling for the superconducting motor includes liquid helium cooling, liquid nitrogen cooling, and refrigerator cooling. Among them, heat transfer and cooling are achieved through the circulation of a circulating working fluid (such as a refrigerant). At the current stage, low-temperature cooling of the superconducting motor can be achieved by partially embedding the refrigerator into the superconducting motor. In this way, when the superconducting motor drives the refrigerator to rotate, the compressor stator and power supply part of the refrigerator also rotate with the refrigerator.

However, existing refrigerators have a problem of complex structure as a whole due to the rotation of the power supply part.

### SUMMARY

An object of the present application is to provide a refrigerator for a superconducting motor and a superconducting motor, which simplify a structure of the refrigerator for the superconducting motor and improves the performance of the superconducting motor in use.

The present application provides a refrigerator for a superconducting motor and a superconducting motor, which simplifies a structure of the refrigerator for the superconducting motor and improves the performance of the superconducting motor in use.

In a first aspect, the present application provides a refrigerator for a superconducting motor, to cool the superconducting motor, where the refrigerator for the superconducting motor includes a refrigeration assembly, a compressor inner stator, a compressor rotor, and a compressor outer stator.

A cylinder of a refrigeration assembly is connected to the compressor inner stator, and an end of the refrigeration assembly is used to connect with a superconducting rotor of the superconducting motor.

The compressor inner stator is sleeved on an outer periphery of the cylinder, the compressor outer stator is sleeved on an outer periphery of the compressor inner stator, and part of the compressor rotor is located between the compressor inner stator and the compressor outer stator; the compressor outer stator is used to connect with a superconducting stator of the superconducting motor.

A gap exists between the compressor rotor and at least an inner periphery of the compressor outer stator.

In the aforementioned refrigerator for a superconducting motor, optionally, the compressor rotor includes a first piston, a second piston, and a magnet. The first piston is sleeved on an inner periphery of the cylinder, and the second piston is connected to the first piston and is sleeved between the outer periphery of the compressor inner stator and the inner periphery of the compressor outer stator.

The magnet is located between the outer periphery of the compressor inner stator and the inner periphery of the compressor outer stator, and is sleeved on the second piston.

A gap is located between both the second piston and the magnet, and the inner periphery of the compressor outer stator.

In the aforementioned refrigerator for a superconducting motor, optionally, the refrigeration assembly includes a compressor housing, which internally has a compressor cavity, and both the compressor inner stator and the compressor rotor are located within the compressor cavity.

The compressor outer stator is sleeved on an outer periphery of the compressor housing, and a first gap exists between the outer periphery of the compressor housing and the inner periphery of the compressor outer stator.

In the aforementioned refrigerator for a superconducting motor, optionally, a first gas bearing is disposed between the first piston and the inner periphery of the cylinder; and a second gap exists between both the second piston and the magnet, and the compressor housing.

In the aforementioned refrigerator for a superconducting motor, optionally, the compressor outer stator includes an outer stator housing, an outer stator silicon steel sheet, and an outer stator coil. The outer stator housing is connected to the superconducting stator of the superconducting motor; the outer stator housing is sleeved on the compressor housing, an outer stator cavity with an opening facing the compressor housing is disposed on an inner periphery of the outer stator housing adjacent the compressor housing, and the outer stator silicon steel sheet and the outer stator coil are both located within the outer stator cavity.

The outer stator silicon steel sheet is an annular piece, an inner periphery of the outer stator silicon steel sheet is provided with a slot, and the outer stator coil is sleeved in the slot.

In the aforementioned refrigerator for a superconducting motor, optionally, a first heat dissipation component is disposed on an outer periphery of the outer stator housing. The first heat dissipation component includes a heat dissipation baseplate and a heat dissipation fin, the heat dissipation fin is disposed on the baseplate, and the baseplate is connected to the outer periphery of the outer stator housing.

In the aforementioned refrigerator for a superconducting motor, optionally, a second heat dissipation component is also disposed on the outer periphery of the compressor housing. The second heat dissipation component includes a heat dissipation blade, and the heat dissipation blade rotates under drive of the superconducting rotor of the superconducting motor to form a heat dissipation airflow.

In the aforementioned refrigerator for a superconducting motor, optionally, the refrigeration assembly also includes a displacer and a cold finger. The cold finger has a cold finger cavity, and the displacer is located within the cold finger cavity. Both ends of the cold finger are connected to the compressor housing and the superconducting rotor of the superconducting motor, respectively.

A second gas bearing is disposed between the displacer and an inner periphery of the cold finger cavity.

In the aforementioned refrigerator for a superconducting motor, optionally, the compressor outer stator further includes a lead wire sheath, the lead wire sheath penetrates the outer stator housing and communicates with the outer stator cavity.

And/or, a colloid component is disposed between the outer stator silicon steel sheet, the outer stator coil, the lead wire sheath, and the outer stator cavity.

In a second aspect, the present application provides a superconducting motor, including a superconducting housing, a superconducting stator, a superconducting rotor, and the aforementioned refrigerator for a superconducting motor. The superconducting housing internally has a superconducting cavity, and the superconducting stator, the superconducting rotor, and at least part of the refrigerator for a superconducting motor are located within the superconducting cavity. The refrigeration assembly of the refrigerator for a superconducting motor is connected to the superconducting rotor, and the compressor outer stator of the refrigerator for a superconducting motor is connected to the superconducting stator.

The present application provides a refrigerator for a superconducting motor and a superconducting motor, where the refrigerator for a superconducting motor includes a refrigeration assembly, a compressor inner stator, a compressor rotor, and a compressor outer stator, where an end of the refrigeration assembly is connected to a superconducting rotor of the superconducting motor, the compressor inner stator is sleeved on an outer periphery of a cylinder, and the compressor outer stator is sleeved on an outer periphery of the compressor inner stator. By connecting the end of the refrigeration assembly to the superconducting rotor of the superconducting motor, the refrigerator for a superconducting motor directly transfers cold energy to the superconducting motor, thereby improving the cooling effect of the refrigerator for a superconducting motor, and the refrigerator for a superconducting motor can effectively reduce the temperature of the superconducting motor. By disposing a gap between the compressor rotor and the inner periphery of the compressor outer stator, the compressor outer stator of the refrigerator for a superconducting motor is separated from the compressor inner stator and the compressor rotor, realizing a split design. By fixedly connecting the separated compressor outer stator to the superconducting stator of the superconducting motor, a power supply line connected to the compressor outer stator does not rotate, improving the structural stability of the refrigerator for a superconducting motor and simplifying the structure of the refrigerator for a superconducting motor. The superconducting rotor of the superconducting motor being connected to the refrigeration assembly of the refrigerator for a superconducting motor can reasonably utilize the space, and enable the refrigerator for a superconducting motor to directly provide a low-temperature environment for the superconducting motor, thereby realizing a high-speed operation of the superconducting motor and improving the use performance of the superconducting motor.

The structure of the present application and its other practical purposes and beneficial effects will be more clearly understood through the description of the preferred embodiments in conjunction with the drawings.

### BRIEF DESCRIPTION OF DRAWINGS

The drawings herein are incorporated into the specification and constitute a part of the specification, illustrating embodiments consistent with the present application, and serving to explain the principles of the present application together with the specification.
FIG. 1 is a structural schematic diagram of a superconducting motor provided in an embodiment of the present application.
FIG. 2 is a first structural schematic diagram of a refrigerator for a superconducting motor provided in an embodiment of the present application.
FIG. 3 is a second structural schematic diagram of a refrigerator for a superconducting motor provided in an embodiment of the present application.
FIG. 4 is a third structural schematic diagram of a refrigerator for a superconducting motor provided in an embodiment of the present application.
FIG. 5 is a partial enlarged schematic diagram of a dotted line frame A in FIG. 4 of a refrigerator for a superconducting motor provided in an embodiment of the present application.
FIG. 6 is a partial enlarged schematic diagram of a dotted line frame B in FIG. 5 of a refrigerator for a superconducting motor provided in an embodiment of the present application.

### Description of reference numerals:

100: refrigeration assembly;
110: compressor housing; 120: displacer; 130: cold finger; 140: second gas bearing; 150: cylinder; 160: first gap; 170: second gap;
200: compressor inner stator;
300: compressor rotor;
310: first piston; 320: second piston; 330: magnet;
400: compressor outer stator;
410: outer stator housing; 411: first heat dissipation component; 412: first housing; 413: second housing; 420: outer stator silicon steel sheet; 430: outer stator coil; 440: lead wire sheath; 450: power supply line;
500: second heat dissipation component;
600: superconducting stator;
700: superconducting rotor.

Through the aforementioned drawings, specific embodiments of the present application have shown, and more detailed descriptions will follow. These drawings and text descriptions are not intended to limit the scope of the concept of the present application in any way, but to illustrate the concept of the present application to persons skilled in the art by referring to specific embodiments.

### DESCRIPTION OF EMBODIMENTS

Here, the exemplary embodiments will be described in detail, and examples thereof are shown in the drawings. When the following description refers to the drawings, unless otherwise indicated, the same numbers in different drawings represent the same or similar elements. The implementations described in the following exemplary embodiments do not represent all implementations consistent with the present application. On the contrary, they are merely examples of devices and methods consistent with some aspects of the present application as detailed in the appended claims.

The inventors of the present application discovered during the actual research process that in the development of electric aircraft propulsion systems, obtaining an efficient and lightweight power system is a challenging task. Superconducting motor is a viable efficient and lightweight component of power systems. The superconducting motor is a motor whose excitation winding is made of a superconducting material and which is wound with a wire that can carry high-density current under a strong magnetic field. Due to the zero-resistance characteristic of the excitation winding, the superconducting motor has almost no energy loss when working, enabling highly efficient energy conversion. Moreover, since there is no power loss in the excitation winding, the volume of the superconducting motor can be significantly reduced. This gives superconducting motors great advantages in some applications that require high power density and high efficiency.

In the prior art, a superconducting motor usually needs to operate in a low-temperature environment to ensure that the superconducting material can maintain a superconducting state. Therefore, the superconducting motor usually requires an effective cooling method to maintain the low-temperature state. Low-temperature cooling for the superconducting motor includes liquid helium cooling, liquid nitrogen cooling, and refrigerator cooling. Among them, the refrigerator achieves heat transfer and cooling through the circulating flow of a circulating working fluid (such as refrigerant). By reasonably connecting the refrigerator with the superconducting motor, the superconducting motor can be effectively controlled to remain a low-temperature state. At the current stage, part of the refrigerator can be embedded into the superconducting motor to provide a low-temperature cooling for the superconducting motor. This embedded rotating low-temperature refrigerator can effectively cool the excitation winding of the superconducting motor, greatly simplifying the structure of the superconducting motor. When the superconducting motor drives the refrigerator to rotate, the compressor stator and a power supply part of the refrigerator also rotate with the refrigerator.

However, in the refrigerator, a compressor stator usually includes a stator core and a winding. The winding is formed by winding a wire and is used to generate a magnetic field and current. The winding on the compressor stator is usually connected to a power supply line to provide current so as to activate the winding, thereby generating a magnetic field. Among them, the connection of the power supply line is usually essential to ensure that the electrical energy is transmitted to a stator winding, thereby enabling the refrigerator to operate normally. When designing and manufacturing this kind of embedded rotating low-temperature refrigerator, the design and installation of the power supply line must be considered to ensure safety and improve stability of the device. For example, when the compressor stator and the power supply part of the refrigerator also rotate with the refrigerator, the power supply line rotating with the rotating component may cause mechanical wear. Considering the aforementioned structural factor, existing refrigerators have an issue of complex structure in design.

In view of this, embodiments of the present application provide a refrigerator for a superconducting motor and a superconducting motor. The refrigerator for a superconducting motor includes a refrigeration assembly, a compressor inner stator, a compressor rotor, and a compressor outer stator, where an end of the refrigeration assembly is connected to an superconducting rotor of the superconducting motor, the compressor inner stator is sleeved on an outer periphery of a cylinder, and the compressor outer stator is sleeved on an outer periphery of the compressor inner stator. By connecting the end of the refrigeration assembly to the superconducting rotor of the superconducting motor, the refrigerator for a superconducting motor directly transfers cold energy to the superconducting motor, thereby improving the cooling effect of the refrigerator for a superconducting motor, and the refrigerator for a superconducting motor can effectively reduce the temperature of the superconducting motor. By disposing a gap between the compressor rotor and the inner periphery of the compressor outer stator, the compressor outer stator of the refrigerator for a superconducting motor is separated from the compressor inner stator and the compressor rotor, realizing a split design. By fixedly connecting the separated compressor outer stator to a superconducting stator of the superconducting motor, the power supply line connected to the compressor outer stator does not rotate, improving the structural stability of the refrigerator for a superconducting motor and simplifying the structure of the refrigerator for a superconducting motor. The superconducting rotor of the superconducting motor being connected to the refrigeration assembly of the refrigerator for a superconducting motor may reasonably utilize the space, and enables the refrigerator for a superconducting motor to directly provide a low-temperature environment for the superconducting motor, thereby realizing a high-speed operation of the superconducting motor and improving the use performance of the superconducting motor.

The technical solution of the present application and how the technical solution of the present application solves the aforementioned technical problem are described in detail below with specific embodiments. The following specific embodiments may be combined with each other, and the same or similar concepts or processes may not be described in detail in some embodiments. The embodiments of the present application will be described below in conjunction with the drawings.

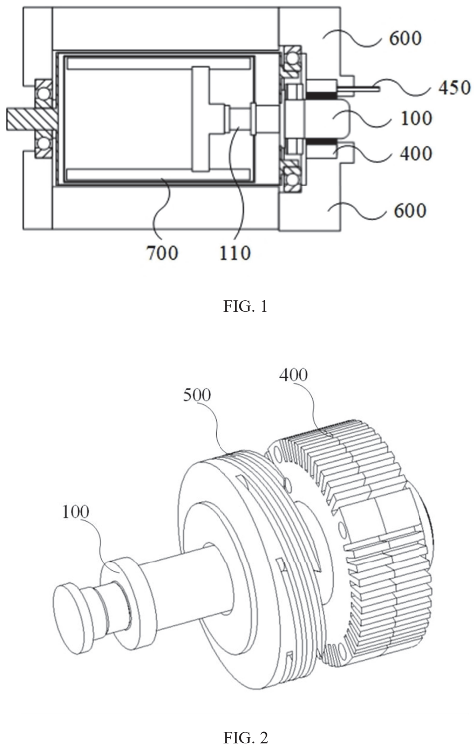

In a first aspect, referring to FIGS. 1 to 4, the present application provides a refrigerator for a superconducting motor, to cool the superconducting motor. The refrigerator for a superconducting motor includes a refrigeration assembly 100, a compressor inner stator 200, a compressor rotor 300, and a compressor outer stator 400.

A cylinder 150 of the refrigeration assembly 100 is connected to the compressor inner stator 200, and an end of the refrigeration assembly 100 is used to connect to a superconducting rotor 700 of the superconducting motor. The compressor inner stator 200 is sleeved on an outer periphery of the cylinder 150, the compressor outer stator 400 is sleeved on an outer periphery of the compressor inner stator 200, and part of the compressor rotor 300 is located between the compressor inner stator 200 and the compressor outer stator 400. The compressor outer stator 400 is used to connect to a superconducting stator 600 of the superconducting motor.

A gap exists between the compressor rotor 300 and at least an inner periphery of the compressor outer stator 400.

Exemplarily, the refrigerator for a superconducting motor provided in the present application is connected to the superconducting motor and is used to cool the superconducting motor. Among them, the compressor outer stator 400 of the refrigerator for a superconducting motor in the present application is connected to the superconducting stator 600 of the superconducting motor, and the end of the refrigeration assembly 100 of the refrigerator for a superconducting motor is connected to the superconducting rotor 700 of the superconducting motor. The superconducting rotor 700 of the superconducting motor can drive the refrigerator for a superconducting motor to rotate.

Exemplarily, the end of the refrigeration assembly 100 of the refrigerator for a superconducting motor is connected to the superconducting rotor 700 of the superconducting motor, so that the superconducting rotor 700 of the superconducting motor drives the refrigerator for a superconducting motor to rotate around an axis of the superconducting motor during the rotation process; in this way, a structurally integrated design of the superconducting motor and the refrigerator for the superconducting motor is realized, which can effectively reduce the volume and space occupation of the superconducting motor and make better use of space. At the same time, the refrigeration assembly 100 provides a more stable cooling effect for the superconducting motor, which helps to maintain the operating temperature and performance of the superconducting motor, improve the stability and reliability of the system, and thus better control the temperature and thermal management of the system.

Exemplarily, by sleeving the compressor inner stator 200 on the outer periphery of the cylinder 150, sleeving the compressor outer stator 400 on the outer periphery of the compressor inner stator 200, and disposing a gap between the compressor rotor 300 and the inner periphery of the compressor outer stator 400, the separation of the compressor outer stator 400 from the compressor inner stator 200 and the compressor rotor 300 is realized; by fixing the compressor outer stator 400 to the superconducting stator 600 of the superconducting motor, the power supply part disposed on the compressor outer stator 400 will no longer rotate with the rotation of the superconducting motor, thereby improving the structural stability of the refrigerator for a superconducting motor and improving the use performance of the refrigerator for the superconducting motor.

By separating the compressor outer stator 400 from the compressor inner stator 200 and the compressor rotor 300, during the operation of the refrigerator for the superconducting motor, the heat released by the compressor outer stator 400, the compressor inner stator 200, and the compressor rotor 300 is distributed to different parts of the refrigerator for the superconducting motor, which is beneficial to the heat dissipation of the refrigerator for the superconducting motor and improves the performance of the refrigerator for the superconducting motor in use.

Exemplarily, a Stirling cycle-based refrigerator for a superconducting motor realizes the refrigeration effect through the compression and expansion of gas in the cycle process. A thermoacoustic cycle-based refrigerator for a superconducting motor utilizes the thermoacoustic inverse effect to realize the heat pumping process that transfers heat from a low temperature end to a high temperature end through a sound wave (alternating mechanical energy). When the high-temperature end is fixed at the ambient temperature, the temperature of the low-temperature end will be continuously decreased, thereby realizing the refrigeration function. The present application does not limit the structure of the refrigerator for a superconducting motor.

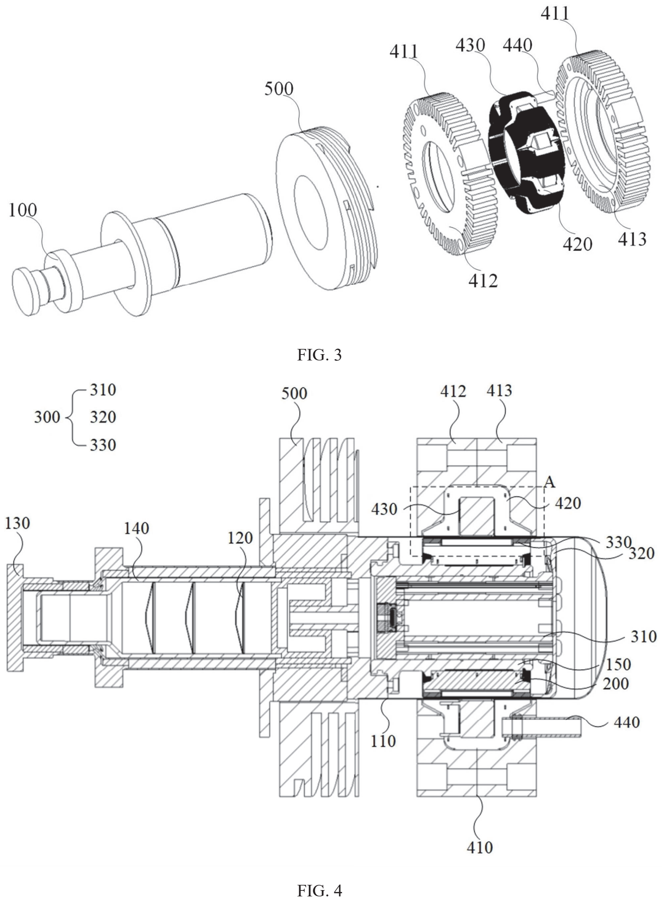

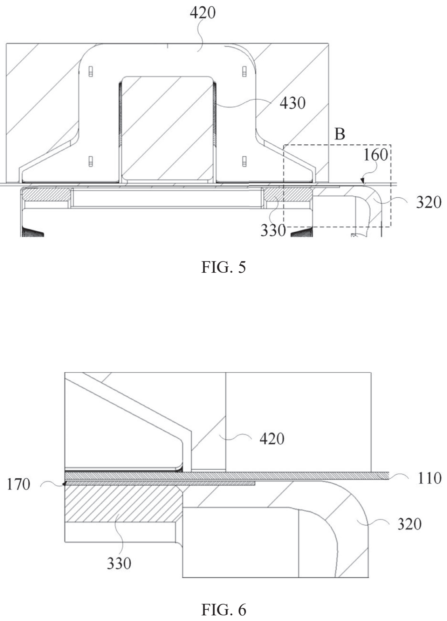

As an achievable implementation, referring to FIG. 4 and FIG. 5, the refrigeration assembly 100 includes a compressor housing 110, which has a compressor cavity, and the compressor inner stator 200 and the compressor rotor 300 are both located in the compressor cavity.

The compressor outer stator 400 is sleeved on the outer periphery of the compressor housing 110, and a first gap 160 exists between the outer periphery of the compressor housing 110 and the inner periphery of the compressor outer stator 400.

Exemplarily, referring to FIG. 4 and FIG. 5, the cylinder 150, the compressor inner stator 200, and the compressor rotor 300 are all located in the compressor cavity, the compressor outer stator 400 is sleeved on the outer periphery of the compressor housing 110, and a first gap 160 exists between the inner periphery of the compressor outer stator 400 and the outer periphery of the compressor housing 110. In this way, a split design of the compressor inner stator 200, the compressor rotor 300, and the compressor outer stator 400 is realized. When the superconducting motor drives the refrigeration assembly 100 to rotate, the compressor housing 110 rotates, and the cylinder 150, the compressor inner stator 200, and the compressor rotor 300 located in the compressor cavity rotate with the compressor housing 110, while the compressor outer stator 400 disposed on the outer periphery of the compressor housing 110 is fixedly connected to the stator part of the superconducting motor and does not rotate, thereby avoiding the rotation of the power supply line 450 of the compressor outer stator 400 and improving the structural stability of the refrigerator for the superconducting motor.

At the same time, by disposing the first gap 160 between the inner periphery of the compressor outer stator 400 and the outer periphery of the compressor housing 110, the friction between the compressor housing 110, which is rotating, and the compressor outer stator 400 is avoided.

As an achievable implementation, the compressor outer stator 400 includes an outer stator housing 410, an outer stator silicon steel sheet 420, and an outer stator coil 430. The outer stator housing 410 is connected to the superconducting stator 600 of the superconducting motor; the outer stator housing 410 is sleeved on the compressor housing 110, an outer stator cavity with an opening facing the compressor housing 110 is disposed on the inner periphery of the outer stator housing 410 adjacent the compressor housing 110, and both the outer stator silicon steel sheet 420 and the outer stator coil 430 are located within the outer stator cavity.

The outer stator silicon steel sheet 420 is an annular piece, the inner periphery of the outer stator silicon steel sheet 420 is provided with a slot, and the outer stator coil 430 is sleeved in the slot.

Exemplarily, the outer stator housing 410 is an annular piece, the outer stator housing 410 is sleeved on the outer periphery of the compressor housing 110, and the inner periphery of the outer stator housing 410 close to the compressor housing 110 is provided with an outer stator cavity with an opening facing the compressor housing 110 to install and place the outer stator silicon steel sheet 420 and the outer stator coil 430.

In some embodiments, referring to FIG. 3 and FIG. 4, the outer stator housing 410 includes a first housing 412 and a second housing 413, and the first housing 412 and the second housing 413 are sequentially arranged along the axial direction of the cylinder 150, and are interconnected by a bolt. By disposing the first housing 412 and the second housing 413, the outer stator silicon steel sheet 420 and the outer stator coil 430 are prevented from being damaged by an external force, and the structural stability of the compressor outer stator 400 is improved. In addition, the disposing of the outer stator housing 410 also provides a carrier for the connection between the compressor outer stator 400 and the superconducting stator 600 of the superconducting motor, improving the connection stability between the superconducting stator 600 of the superconducting motor and the compressor outer stator 400.

Exemplarily, in order to fix the outer stator coil 430, the inner periphery of the outer stator silicon steel sheet 420 is provided with a slot, and the outer stator coil 430 is sleeved in the slot of the outer stator silicon steel sheet 420.

As an achievable implementation, the compressor outer stator 400 also includes a lead wire sheath 440, which penetrates the outer stator housing 410 and communicates with the outer stator cavity.

Exemplarily, the lead wire sheath 440 is an outer insulation layer for protecting a lead wire. The power supply line 450 can be connected to the outer stator coil 430 through the lead wire to supply power for the compressor outer stator coil 430. The lead wire passes through the lead wire sheath 440. By disposing the lead wire sheath 440 and passing the lead wire sheath 440 through the outer stator housing 410 to connect with the outer stator cavity, on one hand, the lead wire sheath 440 can provide an additional protective layer to prevent the lead wire of the outer stator coil 430 from being damaged or worn by the external environment, which helps to extend the service life of lead wire and reduce maintenance cost, and at the same time, it can prevent moisture, dust, and other impurities from entering the interior of the outer stator cavity, keeping the lead wire dry and clean, which helps to ensure the normal operation of the refrigerator for the superconducting motor; on the other hand, the lead wire sheath 440 can provide an insulation protection, preventing the lead wire of the outer stator coil 430 from contacting an external metal or other conductive material, thereby reducing the risk of an electrical fault.

As an achievable implementation, a colloid component is disposed between the outer stator silicon steel sheet 420, the outer stator coil 430, the lead wire sheath 440, and the outer stator cavity.

Exemplarily, the colloid component can be a solidified polymer colloid. By utilizing the adhesive force and bonding force of the colloid, the colloid component can firmly bond the outer stator silicon steel sheet 420 and the outer stator coil 430, the outer stator silicon steel sheet 420 and the outer stator cavity, and the outer stator cavity and the lead wire sheath 440, thereby improving the stability and durability of the bonding of various parts of the compressor outer stator 400.

It can be understood that after winding the outer stator coil 430 in the slot of the outer stator silicon steel sheet 420 and placing the outer stator silicon steel sheet 420 and the lead wire sheath 440 in the outer stator cavity, the outer stator cavity can be filled with the polymer colloid to be solidified by pouring. After the colloid solidifies, a solidified polymer colloid, i.e., the colloid component, is formed between the outer stator silicon steel sheet 420, the outer stator coil 430, the lead wire sheath 440, and the outer stator cavity, thereby improving the stability and sealing of the compressor outer stator 400.

As an achievable implementation, the compressor rotor 300 includes a first piston 310, a second piston 320, and a magnet 330. The first piston 310 is sleeved on the inner periphery of the cylinder 150, and the second piston 320 is connected to the first piston 310 and sleeved between the outer periphery of the compressor inner stator 200 and the inner periphery of the compressor outer stator 400.

The magnet 330 is located between the outer periphery of the compressor inner stator 200 and the inner periphery of the compressor outer stator 400 and is sleeved on the second piston 320.

A gap exists between the second piston 320 and the inner periphery of the compressor outer stator 400, and between the magnet 330 and the inner periphery of the compressor outer stator 400.

Exemplarily, the compressor inner stator 200 is sleeved on the outer periphery of the cylinder 150 through a compression ring.

Exemplarily, when the refrigerator for a superconducting motor is working, the outer stator coil 430 obtains an alternating current of a power supply through the lead wire and the power supply line 450, and an alternating magnetic field is generated between the compressor outer stator 400 and the compressor inner stator 200 to drive the magnet 330 to reciprocate along a central axis of the cylinder 150, thereby driving the first piston 310 to reciprocate along the central axis of the cylinder 150 so as to compress the gas medium. Among them, the magnet 330 can be a permanent magnet 330.

As an achievable implementation, referring to FIG. 4 and FIG. 6, a first gas bearing is disposed between the first piston 310 and the inner periphery of the cylinder 150; a second gap 170 exists between both the second piston 320 and the magnet 330, and the compressor housing 110.

Exemplarily, when the first piston 310 reciprocates along the central axis of the cylinder 150, the first gas bearing generates a gas flow between the first piston 310 and the inner periphery of the cylinder 150 to form an air film support, thereby eliminating the contact friction between the first piston 310 and the inner periphery of the cylinder 150, reducing energy loss and wear, and improving the operating efficiency and service life of the cylinder 150.

As an achievable implementation, a first heat dissipation component 411 is disposed on the outer periphery of the outer stator housing 410. The first heat dissipation component 411 includes a heat dissipation baseplate and a heat dissipation fin. The heat dissipation fin is disposed on the baseplate, and the baseplate is connected to the outer periphery of the outer stator housing 410.

Exemplarily, during the operation of the refrigerator for a superconducting motor, the outer stator coil 430 is connected to the power supply through the lead wire and the power supply line 450, and the current flows through the outer stator coil 430. Since the resistance of the outer stator coil 430 is not zero, the current flowing through the outer stator coil 430 generates resistive heat. Considering that both the outer stator coil 430 and the outer stator silicon steel sheet 420 are located in the outer stator cavity, the outer stator housing 410 effectively reduces the temperature of the compressor outer stator 400. By disposing the first heat dissipation component 411 on the periphery of the outer stator housing 410, disposing the heat dissipation fin on the baseplate, and connecting the baseplate to the periphery of the outer stator housing 410, the designs of the heat dissipation baseplate and the heat dissipation fin can increase the surface area, enhance the heat dissipation area, thereby improving the heat dissipation efficiency, helping to quickly transfer heat to the surrounding environment, improving the heat dissipation efficiency, and meanwhile reducing the temperature of the outer stator cavity, lowering the operating temperatures of the outer stator coil 430 and the outer stator silicon steel sheet 420, extending the service life of the compressor outer stator 400, and reducing the failure rate.

As an achievable implementation, the outer periphery of the compressor housing 110 is further disposed with a second heat dissipation component 500. The second heat dissipation component 500 includes a heat dissipation blade, and the heat dissipation blade is used to rotate under the drive of the superconducting rotor 700 of the superconducting motor to form a heat dissipation airflow.

By disposing the second heat dissipation component 500 on the outer periphery of the compressor housing 110, during the operation of the refrigerator for a superconducting motor, the compressor housing 110 rotates, and the second heat dissipation component 500 rotates under the drive of the compressor housing 110. Thus, the heat dissipation blade rotates, and under the action of centrifugal force, the gas at the heat dissipation blade will be expelled outward in all directions. At this time, the air pressure at the heat dissipation blade decreases, and the cooling air at the end of the refrigerator for a superconducting motor flows into the heat dissipation blade due to the pressure difference. When the cooling air flows through the compressor outer stator 400, it will dissipate heat for the compressor outer stator 400, and at the same time, when the cooling air flows through the first heat dissipation component 411, it will dissipate the heat for the heat dissipation blade.

In this way, by disposing the heat dissipation blade, and utilizing the connection structure between the refrigeration assembly 100 and the superconducting rotor 700 of the superconducting motor, the kinetic energy of the superconducting motor is used as a kinetic energy source of the heat dissipation blade, and the kinetic energy is reasonably utilized; and at the same time, the low air pressure is utilized to dissipate heat for the compressor outer stator 400 while dissipating heat for the compressor housing 110, thereby reducing the temperature of the body of the refrigerator for the superconducting motor.

As an achievable implementation, the refrigeration assembly 100 also includes a displacer 120 and a cold finger 130, where the cold finger 130 has a cold finger cavity, the displacer 120 is located in the cold finger cavity, and two ends of the cold finger 130 are connected to the compressor housing 110 and the superconducting rotor 700 of the superconducting motor, respectively.

A second gas bearing 140 is disposed between the displacer 120 and the inner periphery of the cold finger cavity.

Exemplarily, two ends of the cold finger 130 are connected to the superconducting rotor 700 of the superconducting motor and the compressor housing 110, respectively, and the cold finger 130 can be connected to the compressor housing 110 by laser welding.

Exemplarily, by disposing the second gas bearing 140 between the displacer 120 and the inner periphery of the cold finger cavity, the second gas bearing 140 can form a gas cushion between the displacer 120 and the inner wall of the cold finger cavity, reducing direct contact between them, thereby reducing friction loss. This helps to improve the efficiency of the refrigerator for a superconducting motor and reduce energy consumption. At the same time, the second gas bearing 140 can provide additional support and stability, making the displacer 120 more stable during operation, reducing vibration and noise, and improving the reliability of the device.

It should be emphasized that the second gas bearing 140 is similar to the aforementioned first gas bearing. The first gas bearing and the second gas bearing 140 may also be any structural form that achieves the suspension of the displacer 120 in the cold finger cavity without rigid connection, avoiding the use of traditional leaf spring connection. The design of the second gas bearing satisfies that the acceleration and deceleration of the cold finger 130 during rotation will not be immediately transmitted to the displacer 120, thereby preventing the problem that the leaf spring is prone to break due to large stress during the acceleration and deceleration of rotation of the refrigerator for a superconducting motor.

In a second aspect, referring to FIG. 1, the present application provides a superconducting motor, including a superconducting housing, a superconducting stator 600, a superconducting rotor 700, and the aforementioned refrigerator for the superconducting motor. The superconducting housing has a superconducting cavity, and the superconducting stator 600, the superconducting rotor 700, and at least part of the refrigerator for the superconducting motor are located within the superconducting cavity. The refrigeration assembly 100 of the refrigerator for the superconducting motor is connected to the superconducting rotor 700, and the compressor outer stator 400 of the refrigerator for the superconducting motor is connected to the superconducting stator 600.

Exemplarily, the cold finger 130 of the refrigerator for the superconducting motor delivers cold energy to the superconducting motor to reduce its temperature to below the superconducting critical temperature. When the superconducting stator 600 is reduced below its superconducting critical temperature, its resistance will almost disappear, and current can flow through it without hindrance. By applying a voltage from an external power supply, a magnetic field is formed, causing the superconducting rotor 700 to start rotating. At this time, the refrigerator for the superconducting motor continuously supplies cold energy, thereby maintaining the superconducting motor in a low-temperature state. By disposing the refrigerator for the superconducting motor, the refrigerator for the superconducting motor can maintain the superconducting motor to work within a required superconducting state temperature range, thereby ensuring the performance and stability of the superconducting motor.

It can be understood that, since the superconducting motor of the present application adopts the technical solutions of the aforementioned embodiments of the refrigerator for a superconducting motor, it at least has the beneficial effects brought by the technical solutions of the aforementioned embodiments, which will not be described one by one here.

Other embodiments of the present application will be apparent to those skilled in the art from consideration of the specification and practice of the invention disclosed herein. The present application aims to cover any modifications, uses, or adaptive changes of the present application, and the modifications, uses, or adaptive changes follow the general principles of the present application and include common knowledge or conventional technical means in the technical field that are not disclosed in the present application. The description and embodiments are merely illustrative, and the true scope and spirit of the present application are indicated by the following claims.

It should be understood that the present application is not limited to the precise structures described above and shown in the drawings, and various modifications and changes can be made without departing from its scope. The scope of the present application is only limited by the appended claims.

## Claims

1. A refrigerator for a superconducting motor, applied to cool the superconducting motor, wherein the refrigerator for the superconducting motor comprises a refrigeration assembly, a compressor inner stator, a compressor rotor, and a compressor outer stator;
a cylinder of the refrigeration assembly is connected to the compressor inner stator, and an end of the refrigeration assembly is used to connect with a superconducting rotor of the superconducting motor;
the compressor inner stator is sleeved on an outer periphery of the cylinder, the compressor outer stator is sleeved on an outer periphery of the compressor inner stator, and part of the compressor rotor is located between the compressor inner stator and the compressor outer stator, and the compressor outer stator is used to connect with a superconducting stator of the superconducting motor; and
a gap exists between the compressor rotor and at least an inner periphery of the compressor outer stator.

2. The refrigerator for a superconducting motor according to claim 1, wherein the compressor rotor comprises a first piston, a second piston, and a magnet, the first piston is sleeved on an inner periphery of the cylinder, the second piston is connected to the first piston and is sleeved between the outer periphery of the compressor inner stator and the inner periphery of the compressor outer stator;
the magnet is located between the outer periphery of the compressor inner stator and the inner periphery of the compressor outer stator, and is sleeved on the second piston; and
the gap exists between both the second piston and the magnet, and the inner periphery of the compressor outer stator.

3. The refrigerator for a superconducting motor according to claim 2, wherein the refrigeration assembly comprises a compressor housing, the compressor housing has a compressor cavity, and the compressor inner stator and the compressor rotor are both located in the compressor cavity; and
the compressor outer stator is sleeved on an outer periphery of the compressor housing, and a first gap exists between the outer periphery of the compressor housing and the inner periphery of the compressor outer stator.

4. The refrigerator for a superconducting motor according to claim 3, wherein a first gas bearing is disposed between the first piston and the inner periphery of the cylinder; a second gap exists between both the second piston and the magnet, and the compressor housing.

5. The refrigerator for a superconducting motor according to claim 3, wherein the compressor outer stator comprises an outer stator housing, an outer stator silicon steel sheet, and an outer stator coil, the outer stator housing is connected to the superconducting stator of the superconducting motor; the outer stator housing is sleeved on the compressor housing, an outer stator cavity with an opening facing the compressor housing is disposed on an inner periphery of the outer stator housing adjacent the compressor housing, and the outer stator silicon steel sheet and the outer stator coil are both located within the outer stator cavity; and
the outer stator silicon steel sheet is an annular piece, an inner periphery of the outer stator silicon steel sheet is provided with a slot, and the outer stator coil is sleeved in the slot.

6. The refrigerator for a superconducting motor according to claim 5, wherein a first heat dissipation component is disposed on an outer periphery of the outer stator housing, the first heat dissipation component comprises a heat dissipation baseplate and a heat dissipation fin, the heat dissipation fin is disposed on the baseplate, and the baseplate is connected to the outer periphery of the outer stator housing.

7. The refrigerator for a superconducting motor according to claim 6, wherein the outer periphery of the compressor housing is further provided with a second heat dissipation component, the second heat dissipation component comprises a heat dissipation blade, and the heat dissipation blade is used to rotate under drive of the superconducting rotor of the superconducting motor to form a heat dissipation airflow.

8. The refrigerator for a superconducting motor according to claim 6, wherein the refrigeration assembly further comprises a displacer and a cold finger, the cold finger has a cold finger cavity, the displacer is located within the cold finger cavity, and both ends of the cold finger are connected to the compressor housing and the superconducting rotor of the superconducting motor, respectively; and
a second gas bearing is disposed between the displacer and an inner periphery of the cold finger cavity.

9. The refrigerator for a superconducting motor according to claim 8, wherein the compressor outer stator further comprises a lead wire sheath, and the lead wire sheath penetrates the outer stator housing and communicates with the outer stator cavity; and/or,
a colloid component is disposed between the outer stator silicon steel sheet, the outer stator coil, the lead wire sheath, and the outer stator cavity.

10. A superconducting motor, comprising a superconducting housing, a superconducting stator, a superconducting rotor, and the refrigerator for a superconducting motor according to any one of claims 1-9, wherein the superconducting housing internally has a superconducting cavity, and the superconducting stator, the superconducting rotor, and at least a part of the refrigerator for a superconducting motor are located within the superconducting cavity, the refrigeration assembly of the refrigerator for the superconducting motor is connected to the superconducting rotor, and the compressor outer stator of the refrigerator for the superconducting motor is connected to the superconducting stator.
